# EUROPÄISCHE PATENTSCHRIFT

(11) **EP 2 595 843 B1**
(45) Veröffentlichungstag und Bekanntmachung des Hinweises auf die Patenterteilung: **30.04.2014**
(21) Anmeldenummer: 11730650.6
(22) Anmeldetag: 07.07.2011
(51) Int. Cl.: B60R 21/0136, B60R 16/023, B60R 19/48

(54) **VERFAHREN ZUR ÜBERWACHUNG EINER FUSSGÄNGERERFASSUNGSVORRICHTUNG FÜR EIN FAHRZEUG**
METHODE FOR SURVEILLING A PEDESTRIAN DETECTION SYSTEM FOR A VEHICLE
MÉTHODE DE SURVEILLANCE D'UN SYSTÈME DE DÉTECTION DE PIÉTON POUR UN VÉHICULE

(30) Priorität: 21.07.2010 DE 102010031599
(43) Veröffentlichungstag der Anmeldung: 29.05.2013
(73) Patentinhaber: Bayerische Motoren Werke Aktiengesellschaft, 80809 München (DE)
(72) Erfinder: KOESTLER, Ulrich, 85241 Hebertshausen (DE); RIEDL, Wilhelm, 85276 Pfaffenhofen (DE); FICHTINGER, Gerhard, 85630 Grasbrunn (DE)
(86) Internationale Anmeldenummer: PCT/EP2011/061510
(87) Internationale Veröffentlichungsnummer: WO 2012/010432

(56) Entgegenhaltungen:
- WO-A1-2004/071824
- WO-A1-2007/066064
- DE-A1-102005 011 389
- DE-A1-102006 051 749
- DE-A1-102008 025 466

## Beschreibung

Die vorliegende Erfindung betrifft ein Verfahren zur Überwachung einer Fußgängererfassungsvorrichtung für ein Fahrzeug, bei welcher an einem Stoßfänger des Fahrzeugs ein Absorber vorgesehen ist, welcher sich bei einer Kollision mit einem Fußgänger verformen kann, die Verformung auf ein Verbindungselement übertragen wird und das Verbindungselement einen Sensor betätigt, der ein Sensorsignal erzeugt.

Eine Fußgängererfassungsvorrichtung für ein Fahrzeug ist beispielsweise aus der DE 10 2005 011 389 B4 bekannt. Wenn der Stoßfänger eines Fahrzeuges mit einem Fußgänger kollidiert, wird der Stoßfänger eingedrückt und einer Belastung unterzogen, weiche den Stoßfänger deformiert. Diese Deformation wird auf ein Verbindungselement übertragen, welches einen Sensor betätigt. Das Signal dieses Sensors kann ausgewertet und dazu benutzt werden, entsprechende Schutzmaßnahmen einzuleiten, welche eine Verletzung des Fußgängers verringern können.

Wenn das Fahrzeug abgestellt wird, kann z. B. durch einen Parkrempler eine Verformung des Stoßfängers hervorgerufen werden, welche die Fußgängererfassungsvorrichtung in ihrer Funktion beeinträchtigen kann, so dass diese nicht mehr ordnungsgemäß funktioniert.

Hier setzt die Erfindung ein, deren Ziel es ist, ein Verfahren anzugeben, mit dessen Hilfe die Funktionstüchtigkeit einer Fußgängererfassungsvorrichtung überwacht werden kann.

Dieses Ziel wird erfindungemäß durch ein Verfahren erreicht, bei dem bei jedem Abstellen des Fahrzeugs das aktuelle Sensorsignal als Sollwert gespeichert wird, bei jedem Neustart des Fahrzeugs das aktuelle Signal als Istwert gespeichert wird, der Istwert mit dem Sollwert verglichen wird, und eine Abweichung des Sollwertes vom Istwert angezeigt wird.

Infolge dieser Verfahrensschritte ist es möglich zu erkennen, ob während einer Standzeit des Fahrzeuges eine Verformung des Stoßfängers statt gefunden hat. Aufgrund dieser Information kann dann das Fahrzeug beispielsweise in einer Werkstatt auf die Funktionstüchtigkeit der Fußgängererfassungsvorrichtung überprüft und ggf. eine Reparaturmaßnahme eingeleitet werden. Somit ist eine permanente Funktionstüchtigkeit der Fußgängererfassungsvorrichtung gewährleistet.

Die Unteransprüche beinhalten vorteilhafte Weiterbildungen und Ausgestaltungen der Erfindung.

Gemäß einer vorteilhaften Ausgestaltung wird der Sollwert bzw. der Istwert jeweils bei einem Ausschalten bzw. Einschalten der Zündung erfasst. Somit erfolgt eine im Wesentlichen automatisierte Erfassung der Werte, ohne dass der Fahrer in irgendeiner Weise tätig werden muss.

Um beispielsweise Temperaturdifferenzen oder absichtliche Veränderungen an dem Stoßfänger, z. B. eine Veränderung der Steifigkeit des Stoßfängers durch unterschiedlich lange Kennzeichen, ausgleichen zu können, kann eine Kalibrierung des Ist- und/oder Sollwertes während der Fahrt und/oder bei Stillstand des Fahrzeuges erfolgen. Somit können Einflüsse, die temperatur- und/oder veränderungsbedingt die Fehlererkennung beeinträchtigen könnten, bei der Überprüfung der Funktionstüchtigkeit der Fußgängererfassungsvorrichtung eliminiert werden.

Vorteilhafterweise wird eine Abweichung des Istwertes vom Sollwert dem Fahrer optisch und/oder akustisch angezeigt. Aufgrund dieser Anzeige kann dann der Fahrer eine Werkstatt zur Überprüfung der Fußgängererfassungsvorrichtung aufsuchen.

Alternativ oder zusätzlich kann eine Abweichung des Istwertes vom Sollwert auch im Fehlerspeicher des Fahrzeuges abgelegt werden, wo sie dann in der Werkstatt ausgelesen werden kann.

Der Sensor ist vorzugsweise nahe der Außenhaut des Fahrzeuges (z. B. im Innenbereich eines vorderen Stoßfängers) untergebracht, um eine frühzeitige Signalerkennung zu gewährleisten.

Weitere Einzelheiten, Merkmale und Vorteile der Erfindung ergeben sich aus der nachfolgenden Beschreibung anhand der Zeichnungen.

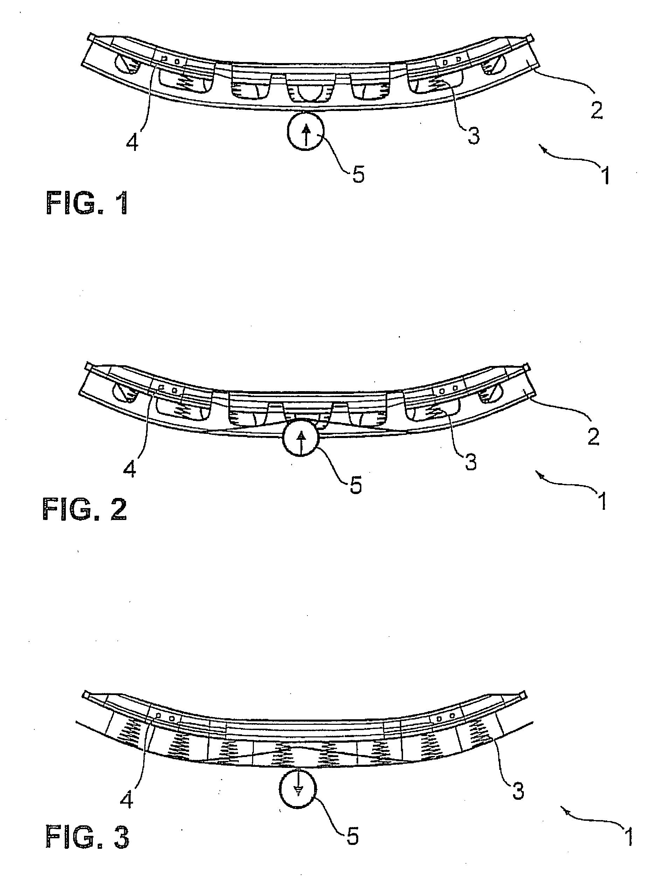

In den Figuren 1 bis 3 ist das erfindungsgemäße Verfahren im Zusammenhang mit einem Parkrempler an einem Stoßfänger 1 eines nicht dargestellten Fahrzeugs erläutert.

Der Stoßfänger 1 umfasst einen Absorber 2, ein Verbindungselement 3 und einen Sensor 4. Der Absorber 2 kann im vorliegenden Fall aus Blech oder einem Schaum bestehen, das Verbindungselement 3 wird von Federelementen gebildet, und der Sensor 4 ist als Sensorleiste ausgebildet. Der Sensor 4 kann direkt am Absorber 2 angeordnet sein. Alternativ kann er auch auf der Außenhaut, wie z. B. der Stoßfängerverkleidung angeordnet sein.

Wird das Fahrzeug beispielsweise auf einem Parkplatz abgestellt, schaltet der Fahrer üblicherweise die Zündung aus. Dabei wird erfindungsgemäß das aktuelle Sensorsignal des Sensors 4 als Sollwert gespeichert.

In Figur 1 ist ein Parkrempier dargestellt, den exemplarisch eine Anhängerkupplung 5 an dem Stoßfänger 1 des parkenden Fahrzeugs erzeugt. Die Anhängerkupplung 5 deformiert dabei den Absorber 2, wie in Figur 2 zu sehen ist. Diese Deformierung erzeugt eine bleibende Verformung des Absorbers 2, die auch dann noch bleibt, wenn die Anhängerkupplung 5 nicht mehr auf den Absorber 2 einwirkt, wie in Figur 3 zu sehen ist. Jedoch wird durch die anhaltende Verformung des Absorbers 2 der Sensor 4 weiterhin mit Druck beaufschlagt, wodurch sich das Sensorsignal ändert.

Damit auch bei relativ leichten Parkremplern eine sichere Signalerzeugung für den Sensor gewährleistet ist, kann der Sensor mit Vorspannung befestigt werden. Dies würde auch bei nahezu unsichtbaren Parkremplern eine zuverlässige Signalerzeugung garantieren. Besonders vorteilhaft ist es, wenn der Sensor nahe oder auch auf der Außenhaut des Fahrzeuges, beispielsweise im Innenbereich eines vorderen Stoßfängers, angeordnet ist, da dies eine frühzeitige, schnelle und sichere Detektierung eines Parkremplers gewährleistet.

Wird nun bei dem angerempelten Fahrzeug die Zündung betätigt, wird das jetzt aktuelle Signal als Istwert gespeichert und mit dem beim Abstellen des Fahrzeuges ermittelten Sollwert verblichen. Sind beide Signale verschieden voneinander, wird eine akustische und/oder optische Anzeige ausgelöst, welche dem Fahrer den Parkrempler signalisiert. Dieser kann dann in einer Werkstatt die Fußgängererfassungsvorrichtung auf ihre Funktionstüchtigkeit überprüfen lassen. Alternativ oder zusätzlich kann das Ergebnis des Vergleich von Soll- und Istwert auch im Fehlerspeicher des Fahrzeugs abgelegt werden.

Wenn Sollwert und Istwert übereinstimmen, erfolgt keine Anzeige, da in einem solchen Fall von einer Funktionstüchtigkeit der Fußgängererfassungsvorrichtung auszugehen ist.

Um Temperatureinflüsse und/oder absichtliche Veränderungen an dem Stoßfänger 1, z. B. eine Veränderung der Steifigkeit des Stoßfängers 1 durch unterschiedlich lange Kennzeichen, ausgleichen zu können, kann eine Kalibrierung des Ist- ünd/oder Sollwertes während der Fahrt und/oder bei Stillstand des Fahrzeuges erfolgen.

### Bezugszeichenliste

- 1: Stoßfänger
- 2: Absorber
- 3: Verbindungselement
- 4: Sensor
- 5: Anhängerkupplung

## Patentansprüche

1. Verfahren zur Überwachung der Funktionsfähigkeit einer Fußgängererfassungsvorrichtung für ein Fahrzeug, bei welcher an einem Stoßfänger des Fahrzeugs ein Absorber vorgesehen ist, welcher sich bei einer Kollision mit einem Fußgänger verformen kann, die Verformung auf ein Verbindungselement übertragen wird und das Verbindungselement einen Sensor betätigt, der ein Sensorsignal erzeugt, **dadurch gekennzeichnet, dass** bei jedem Abstellen des Fahrzeugs das aktuelle Sensorsignal als Sollwert gespeichert wird, dass bei jedem Neustart des Fahrzeugs das aktuelle Signal als Istwert gespeichert wird, dass der Istwert mit dem Sollwert verglichen wird, und dass eine Abweichung des Sollwertes vom Istwert erfasst und/oder angezeigt wird.

2. Verfahren nach Anspruch 1, **dadurch gekennzeichnet, dass** die Erfassung des Sollwertes bzw. des Istwertes jeweils bei einem Ausschalten bzw. Einschalten der Zündung erfolgt.

3. Verfahren nach Anspruch 1 oder 2, **dadurch gekennzeichnet, dass** eine Kalibrierung des Ist- und/oder Sollwertes während der Fahrt erfolgen kann.

4. Verfahren nach einem der Ansprüche 1 oder 2, **dadurch gekennzeichnet, dass** eine Kalibrierung des Ist- und/oder Sollwertes bei Stillstand des Fahrzeuges erfolgen kann.

5. Verfahren nach einem der Ansprüche 1 bis 4, **dadurch gekennzeichnet, dass** eine Abweichung des Istwertes vom Sollwert dem Fahrer optisch und/oder akustisch angezeigt wird.

6. Verfahren nach einem der Ansprüche 1 bis 5, **dadurch gekennzeichnet, dass** eine Abweichung des Istwertes vom Sollwert im Fehlerspeicher des Fahrzeuges abgelegt wird.

## Claims

1. A method of monitoring the operating capability of a pedestrian-detecting device for a vehicle, wherein in the event of a collision with a pedestrian, a shock absorber provided on the vehicle bumper can be deformed, the deformation is transferred to a connecting element, and the connecting element actuates a sensor which generates a signal, **characterised in that** each time the vehicle is parked the instantaneous sensor signal is stored at a set value, at each new start of the vehicle the instantaneous signal is stored as an actual value, the actual value is compared with the set value, and any deviation of the set value from the actual value is detected and/or displayed.

2. A method according to claim 1, **characterised in that** the set value or the actual value is detected whenever the ignition is switched off or on.

3. A method according to claim 1 or claim 2, **characterised in that** the actual and/or set value can be calibrated while in motion.

4. A method according to claim 1 or claim 2, **characterised in that** the actual and/or set value can be calibrated when the vehicle is stationary.

5. A method according to any of claims 1 to 4, **characterised in that** any deviation of the actual value from the set value is optically and/or acoustically indicated to the driver.

6. A method according to any of claims 1 to 5, **characterised in that** any deviation of the actual value from the set value is deposited in the error memory of the vehicle.

## Revendications

1. Procédé permettant de surveiller l'aptitude au fonctionnement d'un dispositif de détection de piétons dans un véhicule, selon lequel est monté sur un pare-choc du véhicule un absorbeur pouvant se déformer en cas de collision avec un piéton, cette déformation est transmise à un élément de liaison et cet élément de liaison actionne un capteur qui produit un signal de capteur,
**caractérisé en ce que**
lors de chacun des arrêts du véhicule, le signal de capteur actuel est enregistré entant que valeur de consigne, lors de chaque nouveau démarrage du véhicule le signal actuel est enregistré entant que valeur réelle, la valeur réelle est comparée à la valeur de consigne et un écart entre la valeur réelle et la valeur de consigne est détecté et/ou indiqué.

2. Procédé conforme à la revendication 1,
**caractérisé en ce que**
la détection de la valeur de consigne ou de la valeur réelle est respectivement effectuée lors d'une coupure ou d'une mise en route de l'allumage.

3. Procédé conforme à la revendication 1 ou 2,
**caractérisé en ce qu'**
un calibrage de la valeur réelle et/ou de la valeur de consigne peut être effectué pendant le déplacement.

4. Procédé conforme à l'une des revendications 1 et 2,
**caractérisé en ce qu'**
un calibrage de la valeur réelle et/ou de la valeur de consigne peut être effectué lorsque le véhicule est à l'arrêt.

5. Procédé conforme à l'une des revendications 1 à 4,
**caractérisé en ce qu'**
un écart entre la valeur réelle et la valeur de consigne est indiquée au conducteur par des moyens optiques et/ou acoustiques.

6. Procédé conforme à l'une des revendications 1 à 5,
**caractérisé en ce qu'**
un écart entre la valeur réelle et la valeur de consigne est déposée dans la mémoire de défaut du véhicule.
